# Europäisches Patentamt

## European Patent Office

## Office européen des brevets

(11) Veröffentlichungsnummer: **0 089 380**
**A1**

(12) # EUROPÄISCHE PATENTANMELDUNG

(21) Anmeldenummer: 82102192.0

(51) Int. Cl.³: **B 65 G 53/66**

(22) Anmeldetag: 18.03.82

(43) Veröffentlichungstag der Anmeldung:
28.09.83 Patentblatt 83/39

(84) Benannte Vertragsstaaten:
AT BE CH DE FR GB IT LI LU NL SE

(71) Anmelder: Freier Grunder Eisen- und Metallwerke GmbH
Fritz-Schäfer-Strasse 26 Postfach 1220
D-5908 Neunkirchen(DE)

(72) Erfinder: Schneider, Klaus, Dipl.Phys.Ing.
Oststrasse 20
D-5901 Wilnsdorf 3(DE)

(72) Erfinder: Osenberg, Klaus-Dieter
Oranienstrasse 14
D-5908 Neunkirchen(DE)

(72) Erfinder: Heinrich, Klaus-Jürgen, Ing. grad.
Breitenbacher Strasse 374
D-5900 Siegen 1(DE)

(74) Vertreter: Blumbach Weser Bergen Kramer Zwirner
Hoffmann Patentanwälte
Radeckestrasse 43
D-8000 München 60(DE)

(54) **Pneumatische Fördervorrichtung und -verfahren für staubförmiges oder feinkörniges Schüttgut.**

(57) Pneumatische Fördervorrichtung mit Materialzufuhreinrichtung und Schubsender. Der Schubsender weist eine Förderdüse (36) zur Erzeugung eines Strahlstromes (37) und einen Düsenkranz oder Ringspalt (63) zur Erzeugung einer zum Strahlstrom konzentrischen Flachströmung (64) auf, die sich im Sendespalt (35) vereinigen und in die Förderleitung (34) unter steuerbarer Mitnahme von Schüttgut eintreten. Die Anlage wird in der Nähe der maximalen Gutbeladung geregelt.

EP 0 089 380 A1

./...

Croydon Printing Company Ltd

FIG. 2

0089380

Freier Grunder
Eisen- und Metallwerke GmbH
5908 Neunkirchen


Pneumatische Fördervorrichtung und -verfahren für staubförmiges oder feinkörniges Schüttgut.

Die Erfindung bezieht sich auf eine pneumatische Fördervorrichtung für staubförmiges oder feinkörniges Schüttgut mit den Merkmalen des Oberbegriffs des Anspruchs 1
sowie auf ein pneumatisches Förderverfahren nach dem
Oberbegriff des Anspruchs 7.

Eine derartige bekannte pneumatische Fördervorrichtung
(DE-OS 27 03 736) ermöglicht eine gleichmäßige und
durchsatzgeregelte Förderung von Schüttgut. Im einzelnen
ist die Austragssteuerleitung seitlich in den Druckbehälter eingeführt, und das so eingeleitete Druckgas
durchströmt das Schüttgut streckenweise und nimmt es
teilweise mit, wenn es durch das Förderrohr abströmt.
Wenn das Druckgas durch das Schüttgut strömt, kann dies
auch zu einer Verdichtung des Schüttgutes führen, insbesondere bei einer Strömung von oben nach unten. Verdichtungen von Schüttgut können aber die Gleichmäßigkeit
der Förderung beeinträchtigen.

Der Erfindung liegt deshalb die Aufgabe zugrunde, eine
pneumatische Fördervorrichtung der oberbegrifflichen
Art hinsichtlich der Gleichmäßigkeit der Förderung zu
verbessern.

Die gestellte Aufgabe wird aufgrund der Maßnahmen des
Hauptanspruchs gelöst. Die Unteransprüche beziehen sich
auf Ausgestaltungen und Weiterbildungen der Erfindung.

Indem die Mündung der Austragssteuerleitung im Druckbehälter als tangentialer Düsenkranz oder Ringspalt ausgebildet ist, strömt solches Druckgas in den Sendespalt unter Mitnahme von Material, ohne jedoch das Schüttgut zu verdichten. Der durch die Förderdüse erzeugte Gasstrom reißt das Material mit und sorgt infolge des richtig gewählten Feststoffanteils (Massenstrom des Materials/Massenstrom des Druckgases) dafür, daß die Gleichmäßigkeit der Förderung bis zum Bestimmungsort erhalten bleibt.

Ein Ausführungsbeispiel der Erfindung wird anhand der Zeichnung beschrieben. Dabei zeigt:

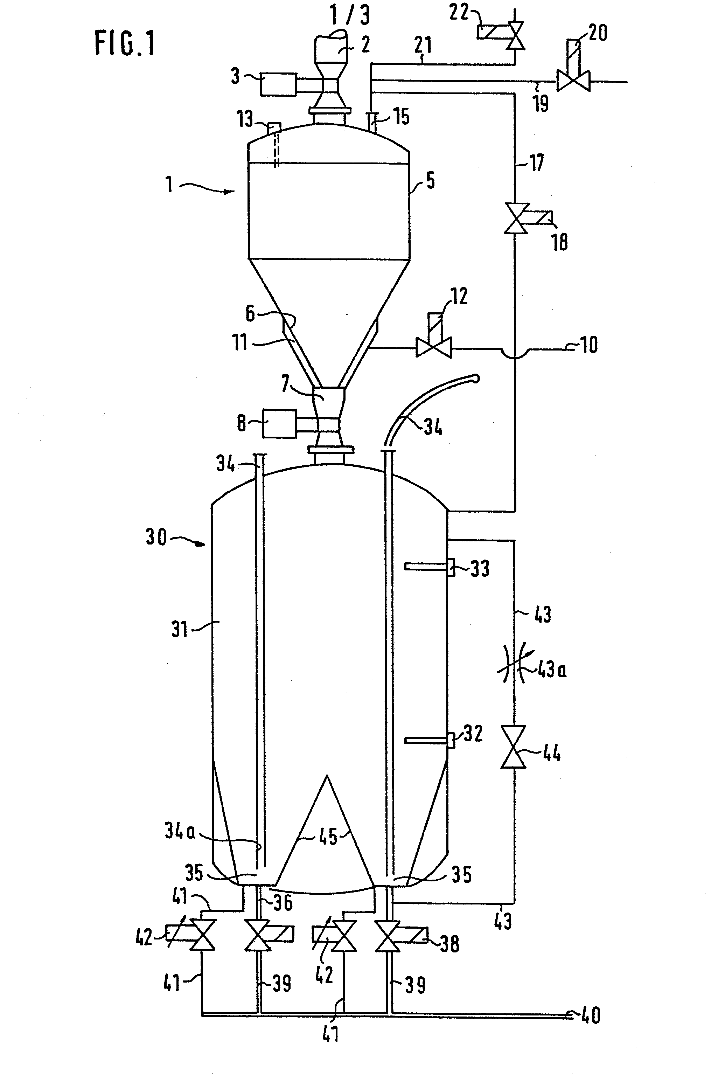

Fig. 1 einen Schubsender,
Fig. 2 eine Einzelheit des Schubsenders in vergrösserter Darstellung und
Fig. 3 und 4 Kennlinienfelder.

Eine Materialzuführleitung 2 ist über einen Schieber 3 absperrbar und dient zur Zuführung von Schüttgut in eine Schleuseneinrichtung 1. Diese besteht aus wenigstens einem Schleusenbehälter 5 mit konischem Boden, der Anströmbereiche aus porösem Edelstahl aufweist und deshalb Anströmboden 6 genannt wird. Der Schleusenbehälter 5 kann über eine Gutleitung 7 entleert werden, die ebenfalls über einen Schieber 8 absperrbar ist. Eine Bespanngasleitung 10 führt in einen konusmantelförmigen Raum 11, von dem aus der Anströmboden 6 mit Druckgas versorgt wird. Die Bespanngasleitung 10 kann mittels eines elektromagnetisch betätigbaren Bespanngasventils 12 geöffnet und geschlossen werden. Am oberen Ende des Schleusenbehälters 5 sind eine Füllstandssonde 13 und ein Gasabführstutzen 15 angebracht. Mit dem Stutzen 15 verbunden sind eine Überströmleitung 17, eine Entlüftungsleitung 19 und eine Drosselleitung 21, die jweils über ein elektromagnetisch betätigbares Überströmventil 18 bzw. Entlüftungsventil 20 bzw. Drosselventil 22 geöffnet oder geschlossen werden können.

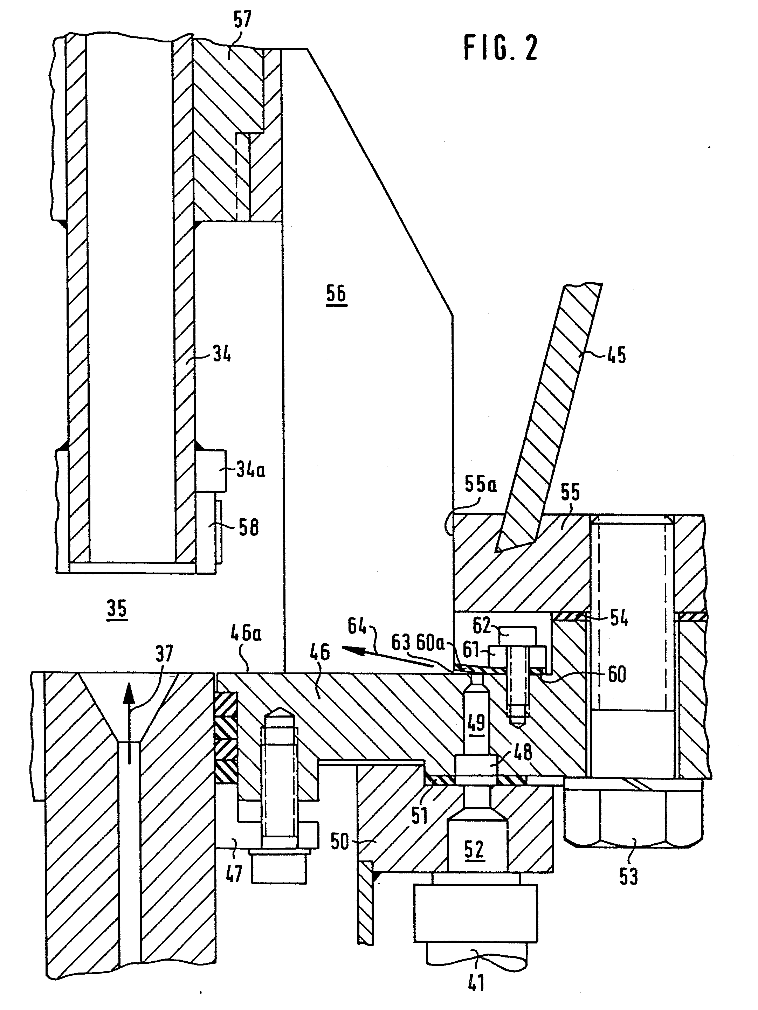

Die Schleuseneinrichtung 1 stellt eine Materialzuführeinrichtung für einen Schubsender 30 dar, der einen Druckbehälter 31 aufweist und mit seinem oberen Bereich über die Gutleitung 7 sowie die Überströmleitung 17 mit der Schleuseneinrichtung 1 verbunden ist. Der Schubsender 30 weist zwei Füllstandssonden 32,33 für den minimalen bzw. maximalen Füllstand auf. Es können mehrere vertikale Förderleitungen 34 vorgesehen sein, die sich ins Innere des Druckbehälter 31 bis in dessen unteren Bereich erstrecken und, getrennt durch jeweils einen Sendespalt 35, einer zugeordneten Förderdüse 36 gegenüberstehen. Die Weite des Sendespaltes 35 ist einstellbar und kann gegebenenfalls auf unterschiedliche Werte, darunter auch Null, geschaltet werden (nicht dargestellt). Der durch die jeweilige Förderdüse 36 hindurchtretende, vertikale, strahlförmige Gasstrom 37 kann durch Drosselventile 38 eingestellt und gesteuert werden, die in Druckgasverteilungsleitungen 39 eingebaut sind. Diese werden von einer gemeinsamen Speiseleitung 40 gespeist, von der außerdem Austragssteuerleitungen 41 abzweigen. Jedem Sendespalt 35 ist jeweils eine solche Austragssteuerleitung 41 zugeordnet, die jeweils einen Gasstromregler 42 aufweist. Im oberen Bereich des Behälters 31 mündet eine Ausgleichsleitung 43, die von einer der Druckgaszuführleitungen 39 abzweigt und ein Absperrventil 44 sowie eine einstellbare Drossel 43a aufweist. Im unteren Bereich des Schubsenders 30 sind ferner Einbauten 45 (Fig. 2) vorgesehen, welche jeweils einen Trichter um den zugehörigen Sendespalt 35 bilden und dessen Förderbedingungen gegenüber einem benachbarten Sendespalt 35 praktisch unabhängig machen.

Fig. 2 zeigt die nähere Umgebung des Sendespaltes 35. Eine Bodenplatte 46 weist eine Stufenbohrung zur Aufnahme der Förderdüse 36 und einer angeschraubten Dichteinrichtung 47 auf. Die Bodenplatte 46 und die Mündung der Düse 36 fluchten zueinander und bilden eine Führungsfläche 46a. An der Unterseite weist die Bodenplatte 46 ferner einen Ringkanal 48 auf, von dem ein Kranz von Düsen 49 ausgeht, welche die Förderdüse 36 im gleichen Abstand umgeben. Der Ringkanal 48 wird durch einen Flanschdeckel 50 abgedeckt und durch Flachdichtungen 51 nach außen abgedichtet. Im Flanschdeckel 50 ist eine Schraubbohrung 52 vorgesehen, an der die Austragssteuerleitung 41 dichtend befestigt ist und den Ringkanal 48 speist. Die Bodenplatte 46 ist mittels Schrauben 53 unter Zwischenlage von Flachdichtungen 54 an einem Wandteil 55 des Druckbehälters 31 befestigt und kann nach Lösen der Schrauben 53 herausgenommen und ausgetauscht werden. Der Wandteil 55 weist eine Bohrung 55a auf, in welche sternförmig angeordnete Leitbleche 56 eingesteckt sind, die über einen Ring 57 zusammengehalten werden und insgesamt wie die Stabilisierungsflossen eines Geschosses aussehen. Der Ring 57 dient außerdem zur Befestigung an dem Förderrohr 34, dessen Beginn 34a auf diese Weise abgestützt wird. Am Beginn 34a des Förderrohrs 34 können Dichtungsteile 58 angebracht sein. Der Kranz der Düsen 49 wird durch einen elastischen Ring 60 abgedeckt, der durch einen Metallring 61 und Schrauben 62 an der Bodenplatte 46 befestigt ist. Im Bereich des Düsenkranzes 49 bildet der elastische Ring 60 eine Lippe 60a, die infolge des Druckgases, welches über die Austragssteuerleitung 41 zugeführt wird, zurückweicht und einen Ringspalt 63 freigibt, der die zugehörige Förderdüse 36 umgibt und eine Flachströmung 64

erzeugt, die konzentrisch auf den Sendespalt 35 gerichtet ist. Die konzentrische Flachströmung 64 wird dabei von der Führungsfläche 46a der Bodenplatte 46 geführt und nimmt schließlich die Höhe des Sendespaltes 35 an.

Statt der Bildung eines Ringspaltes 63 kann auch ein "tangentialer" Düsenkranz vorgesehen sein, d.h. dessen einzelne Düsen 49 tangential auf die Führungsfläche 46a münden.

Der Betrieb der Vorrichtung geht wie folgt vor sich: Wenn die Sonde 32 für minimalen Füllstand des Schubsenders 30 anspricht, werden das Entlüftungsventil 20 und das Bespanngasventil 12 geöffnet, so daß das Bespanngas durch den Anströmboden 6 in das Schleusengefäß 5 strömt. Gleichzeitig wird der Schieber 3 geöffnet und damit das Schleusengefäß 5 mit dem Schüttgut gefüllt. Wenn dessen Füllstandsanzeiger 13 den maximalen Füllstand anzeigt, wird der Schieber 3 geschlossen, das Drosselventil 22 geöffnet und das Entlüftungsventil 20 geschlossen. Das Bespanngas strömt weiterhin durch den Anströmboden 6 und in geringer Menge durch das Drosselventil 22 ab, so daß die lockere Schüttung des Schüttgutes im Schleusenbehälter 5 erhalten bleibt. Die allmähliche Zunahme des Drucks im Schleuseenbehälter 5 führt also nicht zum Zusammensinken des Schüttguts. Diese Gefahr besteht dann, wenn das Schleusengefäß 5 von oben bespannt wird und es sich um ein staubförmiges Schüttgut handelt. Wenn der Druck im Schleusengefäß 5 den Druck im Schubsender 30 erreicht, werden das Drosselventil 22, das Bespanngasventil 12 und das Überströmventil 18 geschlossen und der Schieber 8 geöffnet, so daß das Material in den Schubsender 30 gelangt. Danach werden das Überströmventil 18 und der Schieber 8 geschlossen, womit der Umschleusvorgang beendet ist.

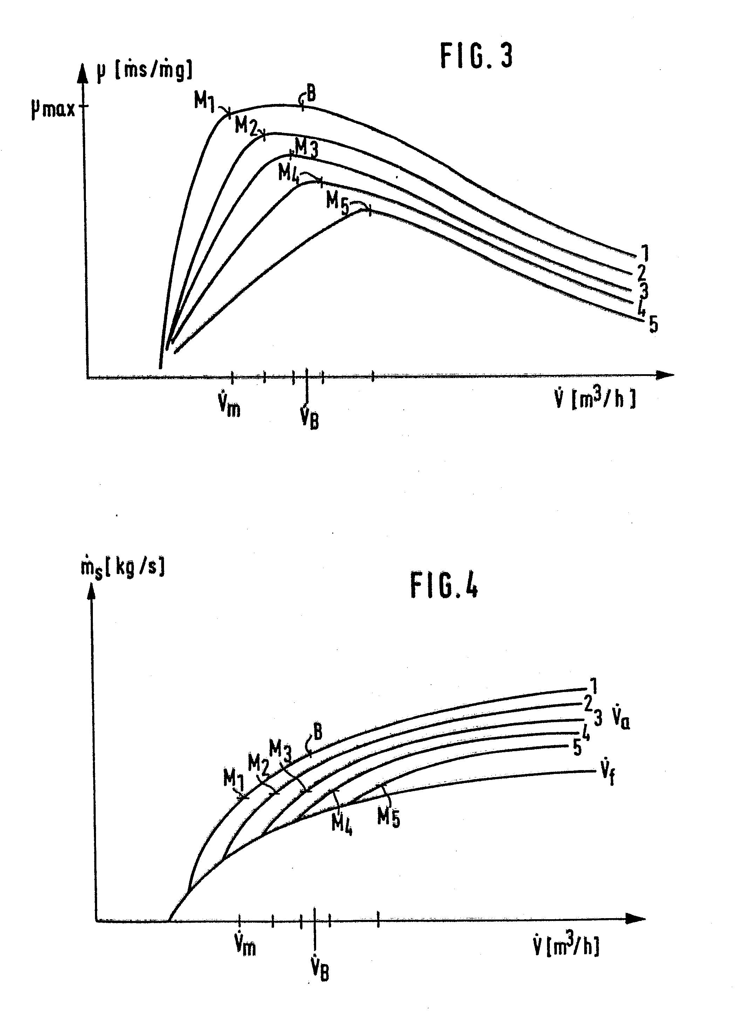

Die Speiseleitung 40 führt einen Gasamtvolumenstrom $\dot{V}$ zu, der sich auf einzelne Volumenströme $\dot{V}_f$ für das Fördergas und $\dot{V}_a$ für das Austragsgas aufteilt. In den Förderleitungen 34 erscheint dann erneut der Gesamtvolumenstrom $\dot{V}$, der mit dem zu fördernden Schüttgut beladen ist. Das Verhältnis des Masse-stromes $\dot{m}g$ Schüttgut zum Masse-strom $\dot{m}g$ des Fördergases wird als $\mu$ bezeichnet. Wenn der Gesamtvolumenstrom $\dot{V}$ unterhalb einem bestimmten anlagebedingten Wert ist, wird kein Schüttgut gefördert. Mit steigendem Gesamtvolumenstrom $\dot{V}$ nimmt die Gutbeladung $\mu$ zu, bis eine maximale Gutbeladung $\mu_{max}$ erreicht ist. Dabei wird der geringste spezifische Energieverbrauch erzielt. Weitere Zunahme des Gesamtvolumenstromes $\dot{V}$ führt zu einer Abnahme der Gutsbeladung $\mu$ mit der Tendenz der assymptotischen Annäherung gegen Null. Die Kurvenschar 1 bis 5 in Fig. 3 ist bei variiertem Verhältnis des Fördergasvolumenstromes $\dot{V}_f$ zum Austragsgasvolumenstrom $\dot{V}_a$ gewonnen worden. Mit der relativen Zunahme des Austragsgas-Gesamtvolumenstromes $\dot{V}_a$ nimmt im allgemeinen die maximale Beladung $\mu_{max}$ zu.

In Fig. 4 ist die geförderte Schüttgutmenge $m_s$ in Abhängigkeit von dem Gesamtvolumenstrom $\dot{V}$ dargestellt, wobei die Kurve $\dot{V}_f$ die Förderung nur mit dem Fördergas über die Düsen 36 kennzeichnet. Ausgehend von jeweils einem Festwert für das Fördergas $\dot{V}_f$ zweigen Kurven 1,2, 3,4 und 5 für das Austragsgas $\dot{V}_a$ ab, woraus ersichtlich ist, daß das Austragsgas $\dot{V}_a$ stark zur Erhöhung der Gutsbeladung $\mu$ beiträgt, solange man sich im Anfangszweig der Kurvenschar bewegt. $M_1$ bis $M_5$ kennzeichnen die Arbeitspunkte für maximale Beladung. Bevorzugt wird eine Regelung der Anlage in diesem Bereich, wobei rechts vom jeweiligen Punkt $M_1$ bis $M_5$ die Förderung gleichmäßiger erfolgt als links vom jeweiligen Punkt $M_1$ bis $M_5$. Im vorliegenden Fall ist ein Betriebs- oder Arbeitspunkt B angenommen, der das 1,5-fache des Volumenstromes $\dot{V}_m$ beinhaltet.

Im allgemeinen wird ein bestimmter Schüttgut-Durchsatz von zum Beispiel 1 kg/s verlangt. Um zu diesem Durchsatz zu gelangen, kann $\dot{V}_B$ nur mit Austragsgas erreicht werden, es wäre aber auch möglich, nur mit Fördergas zu arbeiten, wobei letzteres sehr unwirtschaftlich wäre. Im Hinblick auf die Güte der Regelung werden folgende Regelbereiche bevorzugt:

$$\dot{V}_f \quad = 0{,}3 \text{ bis } 0{,}8 \; \dot{V}_m$$

$$\dot{V}_a \quad = 0{,}3 \text{ bis } 0{,}8 \; \dot{V}_m$$

$$\dot{V}_f + V_a = 1{,}0 \text{ bis } 1{,}5 \; \dot{V}_m$$

Der Verlauf der Kennlinien in Fig. 3 und 4 hängt von dem zu fördernden Material und den jeweiligen geometrischen Verhältnissen des Schubsenders und insbesondere dem Durchmesser der Förderleitung 34 ab, welche die Luftgeschwindigkeit stark beeinflußt. Für jede pneumatische Förderanlage muß deshalb der günstigste Regelbereich des Gesamtvolumenstromes $\dot{V}$ und die Aufteilung auf $\dot{V}_f$ und $\dot{V}_a$ ermittelt werden. Innerhalb dieser günstigen Bereiche kann eine extreme Gleichmäßigkeit der Förderung erzielt werden, d.h. ein bestimmter gewünschter Gutmengenstrom kann über längere Zeiten genau eingehalten werden. Die erfindungsgemäße pneumatische Fördervorrichtung eignet sich deshalb besonders gut zum Dosieren.

----

Patentansprüche:

1. Pneumatische Fördervorrichtung für staubförmiges oder feinkörniges Schüttgut mit folgenden Merkmalen: ein Druckbehälter (31) weist in seinem oberen Bereich eine Materialzuführeinrichtung (1) und in seinem unteren Bereich wenigstens eine Förderdüse (36) sowie, durch einen Sendespalt (35) getrennt, ein nach oben geführtes Förderrohr (34) auf, wodurch ein Schubsender (30) gebildet wird;
Dem Schubsender (30) ist über wenigstens eine zusätzliche Austragssteuerleitung (41) noch Austragssteuergas zur Steuerung oder Regelung des Massestromes des Materials zuführbar;
g e k e n n z e i c h n e t   d u r c h :
die Mündung der Austragssteuerleitung (41) im Druckbehälter (31) ist als tangentialer Düsenkranz oder Ringspalt (63) ausgebildet, der die zugehörige Förderdüse (36) umgibt und auf diese ausgerichtet ist, wobei eine konzentrische Flachströmung (64) in Richtung auf den Sendespalt (35) zwischen Förderdüse (36) und Förderrohr (34) erzeugt wird.

2. Pneumatische Fördervorrichtung nach Anspruch 1, dadurch gekennzeichnet, daß die Flachströmung (64) längs einer Führungsfläche (46a) geführt ist.

3. Pneumatische Fördervorrichtung nach Anspruch 1 oder 2, dadurch gekennzeichnet, daß die Führungsfläche (46a) Teil des Bodens des Druckgefäßes (31) und als austauschbare Bodenplatte (46) ausgebildet ist.

4. Pneumatische Fördervorrichtung nach einem der Ansprüche 1 bis 3, gekennzeichnet durch trichterförmige Einbauten (45) um jede Förderdüse (36).

5.    Pneumatische Fördervorrichtung mit wenigstens
einem Schleusenbehälter (5) als Materialzuführeinrichtung für den Druckbehälter (31), nach einem der Ansprüche 1 bis 4,
dadurch gekennzeichnet, daß der Schleusenbehälter (5)
einen Anströmboden (6) aufweist, über den Bespanngas
von außen her in den Schleusenbehälter (5) zuführbar
ist.

6.    Pneumatisches Förderverfahren von staubförmigem
oder feinkörnigem Schüttgut mittels eines Schubsenders
(30), der einen Druckbehälter (31), ein oder mehrere
Förderdüsen (36) und zugeordnete, über je einen Sendespalt (35) getrennte Förderrohre (34) aufweist, wobei
ein oder mehrere aufwärtsgerichtete, strahlförmige Gasströme (37) mit einstellbarem Fördergasvolumenstrom
($\dot{V}_f$) erzeugt werden, in die jeweils von der Seite her
das Schüttgut mittels eines Austragsvolumenstromes
($\dot{V}_a$) eingetragen wird, wobei der Austragsvolumenstrom
($\dot{V}_a$) und der Fördergasvolumenstrom ($\dot{V}_f$) einen Gesamtvolumenstrom ($\dot{V}$) ergeben,
gekennzeichnet durch folgende Merkmale:
es wird als Austragsvolumenstrom ($\dot{V}_a$) eine konzentrische
Flachströmung (64) zu dem strahlförmigen Gasstrom (37)
erzeugt;
der Gesamtvolumenstrom ($\dot{V}$) wird hinsichtlich der Anteile
des Austragsvolumenstromes ($\dot{V}_a$) und des Fördergasvolumenstromes ($\dot{V}_f$) so verändert, bis der Arbeitspunkt der
maximalen Beladung ($\mu_{max}$) festgestellt ist;
der Regelbereich für den Austragsvolumenstrom ($\dot{V}_a$) und
den Fördergasvolumenstrom ($\dot{V}_f$) wird in der Nähe des Bereichs ($\dot{V}_m$) der maximalen Beladung eingestellt.

7.   Pneumatisches Förderverfahren nach Anspruch 6, dadurch gekennzeichnet, daß der Regelbereich des Fördergasvolumenstromes ($\dot{V}_f$) auf 0,3 bis 0,8 Gesamtvolumenstrom bei maximaler Beladung ($\dot{V}_m$) und der Regelbereich des Austragsvolumenstromes ($\dot{V}_a$) auf 0,3 bis 0,8 des Gesamtvolumenstromes bei maximaler Beladung ($\dot{V}_m$) eingehalten werden.

----

FIG.1

0089380

0089380

# FIG. 2

0089380

FIG. 3

FIG.4

Europäisches
Patentamt

**EUROPÄISCHER RECHERCHENBERICHT**

**0089380**
Nummer der Anmeldung

| EINSCHLÄGIGE DOKUMENTE | | EP 82102192.0 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - B - 1 281 931 (DUCON) -- | | B 65 G 53/66 |
| A | GB - A - 1 335 523 (POLYSIUS) -- | | |
| A | DD - A - 51 251 (VOLLHEIM) -- | | |
| D,A | DE - A1 - 2 703 736 (FREIER GRUNDER) ---- | | |

| | | RECHERCHIERTE SACHGEBIETE (Int. Cl. ³) |
|---|---|---|
| | | B 65 G 53/00 |

| X | Der vorliegende Recherchenbericht wurde für alle Patentansprüche erstellt. | | |
|---|---|---|---|
| **Recherchenort** WIEN | **Abschlußdatum der Recherche** 16-11-1982 | | **Prüfer** PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82